Europäisches Patentamt

(19) European Patent Office

Office européen des brevets

(11) Veröffentlichungsnummer: **0 050 689**
**B1**

(12) # EUROPÄISCHE PATENTSCHRIFT

(45) Veröffentlichungstag der Patentschrift:
**27.08.86**

(51) Int. Cl.⁴: **B 23 D 53/08,** B 23 D 57/02, F 17 C 13/00, B 29 C 67/20

(21) Anmeldenummer: **80107904.7**

(22) Anmeldetag: **15.12.80**

(54) **Verfahren und Vorrichtung zum Herstellen von kalottenförmigen Ausschnitten wärmedämmender Wände aus Kunststoffschaum.**

(30) Priorität: **29.10.80 DE 3040694**

(43) Veröffentlichungstag der Anmeldung:
**05.05.82 Patentblatt 82/18**

(45) Bekanntmachung des Hinweises auf die Patenterteilung:
**27.08.86 Patentblatt 86/35**

(84) Benannte Vertragsstaaten:
**BE FR GB IT NL SE**

(56) Entgegenhaltungen:
**AT - B - 301 285**
**CH - A - 484 738**
**DE - A - 1 704 788**
**DE - A - 1 906 592**
**DE - A - 2 849 259**
**FR - A - 353 889**
**GB - A - 2 021 230**
**US - A - 3 350 969**
**US - A - 3 850 061**
**US - A - 3 888 150**

(73) Patentinhaber: **WEZEL GmbH + Co. Kommanditgesellschaft, Georg-Kramer-Strasse 7-9, D-3560 Biedenkopf (DE)**

(72) Erfinder: **Schmalz, Gerhard, Schillerweg 21, D-3560 Biedenkopf/Hessen (DE)**

(74) Vertreter: **Thielmann, Paul, Dipl.-Landw., Am Eschenberg 14, D-3560 Biedenkopf (DE)**

## Beschreibung

Die vorliegende Erfindung betrifft eine Vorrichtung zum Herstellen von kalottenförmigen Ausschnitten wärmedämmender Wände zur Wärmeisolierung von im wesentlichen kugelförmigen Behältern insbesondere für den Transport und die Lagerung von Flüssigkeiten, wobei man Teilstükke der Wärmedämmwände herstellt, die eine Wärmedämmschicht aus Kunststoffschaum und eine darüber angeordnete Dampfsperre in Form einer Schicht aus Metall oder festem Kunststoff haben.

Es ist bekannt, eine Wärmeisolierschicht für Behälter zum Transport und zur Lagerung von Flüssigkeiten und Gasen in der Weise herzustellen, dass man kalottenförmige Teilstücke der Isolierwand in Formen schäumt, die aussen aufzubringende Dampfsperre in Form einer Aluminiumfolie mittels einer der Kalottenform entsprechenden Formpresse aufklebt und die Isolierwand dann am Behälter montiert. Diese Lösung ist jedoch nicht befriedigend, weil solche Formen sehr teuer sind, was sich besonders bei der gegebenen Formenmannigfaltigkeit der Behälter als erheblicher Teuerungsfaktor bemerkbar macht.

Indessen ist es auch bekannt, aus Kunststoffschaumblöcken Platten mit gekrümmten Oberflächen zu schneiden. Die DE-A-2 849 259 offenbart eine Vorrichtung mit einem Schneidwerkzeug – das auch eine Säge sein kann – welches an beiden Enden behalten wird und zur Erzielung einer bombierten Schnittfläche gekrümmt werden kann. Dabei ist die Krümmung des Schneidwerkzeuges während des Schneidvorganges veränderbar.

Aus der DE-A-1 906 592 geht eine Vorrichtung hervor, wobei ein Materialblock, von dem gekrümmte Platten abgeschnitten werden, während eines horizontalen Schneidvorganges zum Schneidwerkzeug, z.B. Bandmesser, gehoben und gesenkt werden kann und zwar durch Führung über eine gekrümmte Führungsbahn. Damit kann ein in Schneidrichtung gekrümmter Schnitt erzielt werden.

Die US-A-3 850 061 offenbart eine Vorrichtung zum Schneiden von Platten von einem Materialblock mit einem waagerecht schneidenden Bandmesser, das an zwei senkrechten Säulen vertikal verstellbar und in jeder Höhe feststellbar ist.

Mit den Vorrichtungen gemäss den vorgenannten Druckschriften können zwar in verschiedenen Richtungen gekrümmte Schnitte ausgeführt werden. Jedoch mit keiner dieser Vorrichtungen können Schnitte mit der exakten Krümmung einer Kugeloberfläche hergestellt werden.

Um aber Ausschnitte wärmedämmender Wände gemäss der eingangs definierten Art herzustellen, bedarf es nicht nur einer Vorrichtung, mit der Schnitte in der exakten Krümmung einer Kugeloberfläche hergestellt werden können. Auch die Seitenflächen müssen nach bestimmten vorgegebenen Schnittführungen zugeschnitten werden.

Durch die US-A-3 888 150 ist eine Vorrichtung bekannt geworden, wobei Plattenrohlinge an drei Seiten gleichzeitig mittels entsprechend angeordneter Bandsägen zugeschnitten werden können. Dabei verlaufen alle Schnitte parallel zu einer senkrecht durch die Plattenmitte gedachten Linie. Eine derartige Vorrichtung ist aber für das Zuschneiden der Seitenflächen von kalottenförmigen Wandausschnitten nicht brauchbar, denn hierbei müssen die Schnitte gegen eine senkrecht durch die Plattenmitte gedachte Linie geneigt verlaufen, wobei die Neigung sich entlang der Schnittlinien ändern muss.

Der Erfindung liegt daher die Aufgabe zugrunde, eine Vorrichtung zu schaffen, mit der von einem Kunststoffschaumblock kalottenförmige Plattenkörper mit der exakten Krümmung einer Kugeloberfläche geschnitten werden können, die in einem weiteren Teil der Vorrichtung durch Beschneiden der Seitenflächen zu Ausschnitten wärmedämmender Wände zur Wärmeisolierung von im wesentlichen kugelförmigen Behältern insbesondere für den Transport und die Lagerung von Flüssigkeiten geformt werden können. Dabei soll sowohl der Vorrichtungsteil zum Schneiden der Kalottenrohlinge, als auch der Vorrichtungsteil zum Beschneiden der Stossflächen der Kalottenrohlinge auf verschiedene Krümmungsradien der Wandausschnitte einstellbar sein.

Die gestellte Aufgabe wird erfindungsgemäss durch eine Vorrichtung mit den Merkmalen des Patentanspruchs 1 gelöst.

In dem kennzeichnenden Teil der Ansprüche 2 bis 7 sind die Merkmale der erfindungsgemässen Sägeeinrichtung zum Schneiden der Kalottenrohlinge aus einem Kunststoffschaumblock aufgeführt.

Die Merkmale der Sägeeinrichtung zum massgenauen Zuschneiden der Stossflächen an den einzelnen Wandausschnitten nach der Erfindung gehen aus dem kennzeichnenden Teil des Anspruchs 8 hervor.

Die erfindungsgemässe Vorrichtung wird im Folgenden anhand einer sie beispielsweise wiedergebenden Zeichnung näher erläutert. Es zeigen in schematisierter Darstellung:

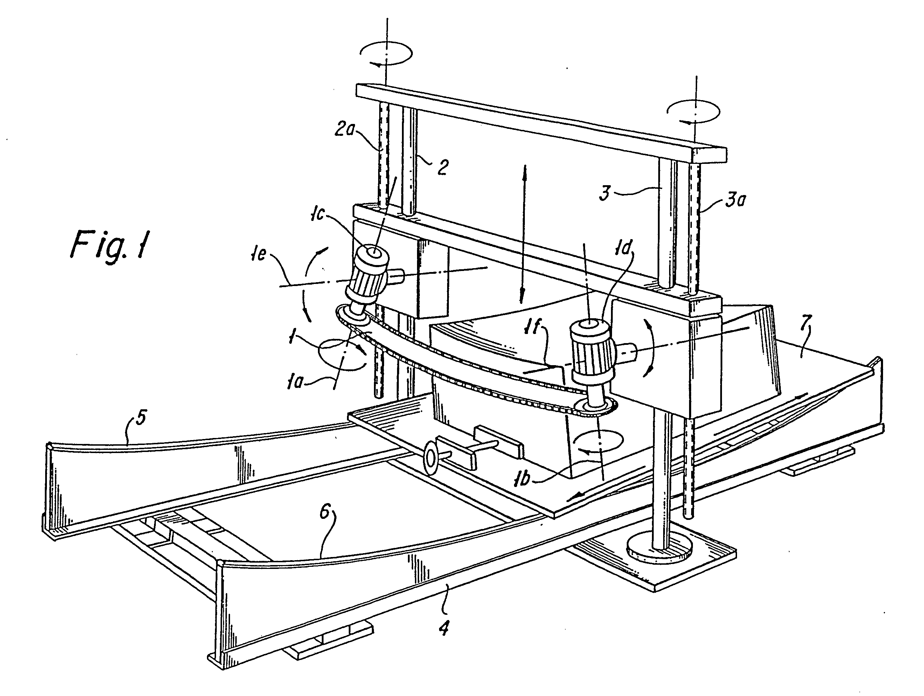

Fig. 1 die Einrichtung zum Schneiden der Kalottenrohlinge aus einem Kunststoffschaum-Block perspektivisch gesehen;

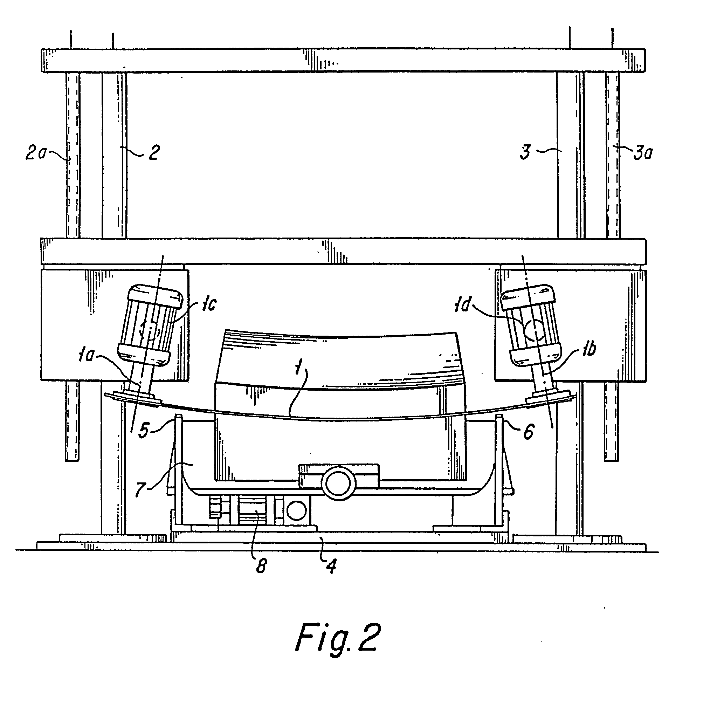

Fig. 2 die gleiche Einrichtung aus der Sicht gegen die Schneidrichtung;

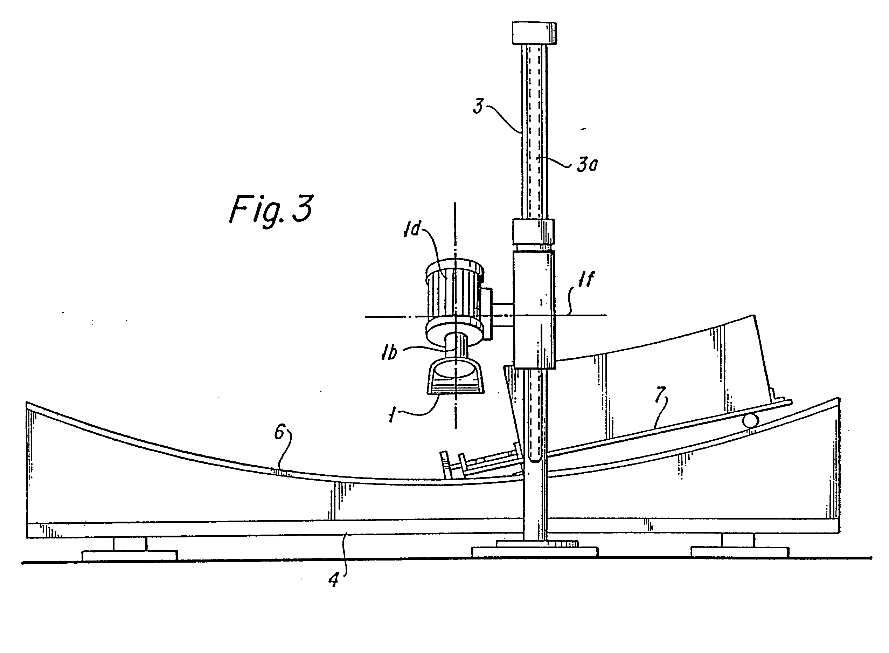

Fig. 3 die gleiche Einrichtung aus der Sicht quer zur Schneidrichtung;

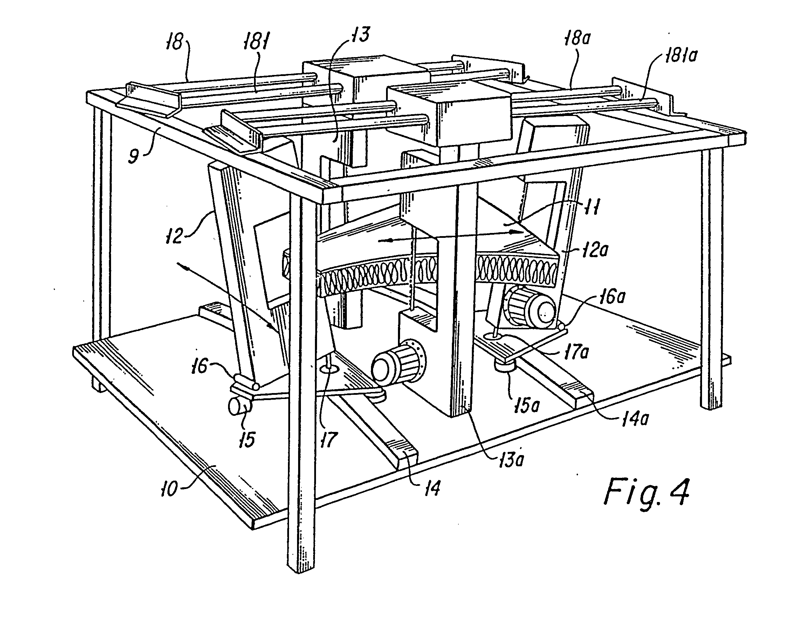

Fig. 4 die Einrichtung zum Beschneiden der Stossflächen perspektivisch gesehen.

Die Vorrichtung zur Formgebung des Schaumkörpers eines Wandausschnittes weist eine Einrichtung zum Schneiden von Kalottenrohlingen aus einem grob vorgeformten Kunststoffschaum-Block und eine Einrichtung zum exakten Schneiden der Stossflächen der Wandausschnitte auf.

Die Einrichtung zum Schneiden der Kalottenrohlinge besteht im wesentlichen aus einer an sich bekannten Kettensäge 1 mit einer über die Kanten eines biegsamen Schwertes geführten, an beiden Umlenkachsen 1a, 1b durch je einen Elektromotor 1c, 1d angetriebenen Sägenkette.

Die Kettensäge 1 ist mit beiden Enden an senkrechten Führungsholmen 2, 3 auf und ab beweglich und in jeder beliebigen Höhe feststellbar angeordnet.

Die Umlenkachsen 1a, 1b der Kettensäge 1 sind jeweils um eine waagerechte, parallel zur Schneidrichtung verlaufende Neigungsachse 1e, 1f gegeneinander neigbar – wobei das Schwert vorzugsweise in der Mitte nach unten gebogen wird – und in jeder erreichbaren Neigung feststellbar. Dadurch wird eine innerhalb gewisser Grenzen beliebig veränderbare, quer zur Schneidrichtung verlaufende Krümmung der Schnittfläche erzielt.

Für die Auf- und Ab-Bewegungen der Kettensäge 1 zwecks Einstellung der Schnitthöhe sind an den Führungsholmen 2, 3 zwei synchron laufende Spindeltriebe 2a, 3a vorgesehen, die jeweils parallel neben den Führungsholmen 2, 3 verlaufend angeordnet sind.

Die beiden senkrechten Führungsholme 2, 3 sind jeweils in der Mitte einer Längsseite an einem Tischgestell 4 angeordnet. Das Tischgestell 4 trägt auf einem Paar auswechselbarer, in Längsrichtung verlaufender Führungsschienen 5, 6 eine viereckige Tischplatte 7, die mittels Laufrollen auf den Führungsschienen 5, 6 in Schneidrichtung der Kettensäge 1 vor und zurück bewegbar ist. Durch eine Krümmung der Führungsschienen 5, 6 wird die Krümmung der von der Kettensäge 1 erzeugten Schnittfläche in Schneidrichtung bestimmt.

Bei dem in der Zeichnung dargestellten und hier beschriebenen Ausführungsbeispiel wird eine Änderung der Schnittflächenkrümmung in Schneidrichtung dadurch erzielt, dass die Führungsschienen 5, 6 gegen solche mit einem anderen Krümmungsverlauf ausgetauscht werden.

Die Tischplatte 7 ist mit einer Einrichtung zum Aufspannen eines im Grundriss grob vorgeformten Kunststoffschaum-Blockes versehen. An dem Tischgestell 4 ist unterhalb der Tischplatte 7 eine Antriebseinrichtung mit einem Elektromotor 8 vorgesehen, durch die die Tischplatte 7 unter der Kettensäge 1 hindurch vor und zurück bewegbar ist. Dabei ist natürlich die Bewegungsgeschwindigkeit der Tischplatte 7 der Schnittgeschwindigkeit der Kettensäge 1 anpassbar.

Die Kettensäge 1 ist zweischneidig. Dadurch kann bei jedem Weg der mit einem Kunststoffschaum-Block bestückten Tischplatte 7 unter der Kettensäge 1 hindurch – hin wie auch zurück – eine beliebig dicke gekrümmte Schicht von dem Kunststoffschaum-Block abgeschnitten werden.

Die zu der erfindungsgemässen Vorrichtung gehörende Einrichtung zum Schneiden der jeweils vier Stossflächen der vorzugsweise segmentsektorförmigen Wandausschnitte setzt sich im wesentlichen wie folgt zusammen: Zwischen vier Eckpfosten eines quaderförmigen Rahmengestells 9 ist im unteren Bereich ein Tisch 10 angeordnet, auf dem die zu beschneidenden Wandausschnitt-Rohlinge 11 mit der Innenseite nach unten liegend fixierbar sind. Auf dem Tisch 10 sind an zwei einander gegenüberliegenden Seiten zwei Bandsägen 12, 12a für die Schnitte nach den Segmentlinien entlang dieser Linien bewegbar angeordnet.

Über dem Tisch 10 sind an den beiden anderen einander gegenüberliegenden Seiten zwei weitere Bandsägen 13, 13a an dem Rahmengestell 9 hängend für die Schnitte nach den Sektorlinien an diesen Linien entlang bewegbar angeordnet.

Auf dem Tisch 10 sind zur Führung der stehend beweglichen Bandsägen 12, 12a für die Schnitte nach den Segmentlinien gekrümmte Führungsschienen 14, 14a auswechselbar befestigt, an denen die Bandsägen 12, 12a jeweils mit einem Rollen-Untersatz 15, 15a geführt werden und deren Krümmung der jeweiligen Krümmung der Segmentlinien entspricht.

Die stehenden Bandsägen 12, 12a sind auf ihren Rollen-Untersätzen 15 bzw. 15a um eine parallel zur Schneidrichtung verlaufende Achse 16 bzw. 16a innerhalb gewisser Grenzen neigbar gelagert, wobei jede gewünschte Neigung mittels einer Schraubspindel 17 bzw. 17a fixierbar ist. Die Verstellmöglichkeiten der Neigung dieser Bandsägen sind notwendig, weil der Winkel zwischen der Rotationsachse des zu isolierenden Behälters und der durch die vier Ecken des jeweiligen Wandausschnittes gebildeten Ebene (Tischfläche) sich von Segment zu Segment bei gleichem Wölbungsradius sowie auch bei einem anderen Wölbungsradius ändert.

Die hängend am Rahmengestell 9 angeordneten Bandsägen 13, 13a für die Schnitte nach den Sektorlinien sind jeweils an einem im wesentlichen waagerecht über der gewünschten Schnittlinie verlaufenden Paar von Führungsholmen 18, 181 bzw. 18a, 181a in Schneidrichtung der Bandsägen beweglich aufgehängt.

Bei jedem dieser Holmenpaare ist die Ebene mindestens einer der Holme gegenüber der Ebene des anderen Holmes des gleichen Paares neigbar und in jeder gewünschten Neigung feststellbar.

Dadurch, dass die Ebenen der beiden Holme des gleichen Paares nicht parallel zueinander verlaufen, wird die Neigung der betreffenden Bandsäge während des Schnittverlaufes verändert. Dies ist notwendig, weil die Lage des mit allen vier Ecken auf dem Tisch verlaufenden Wandausschnittes im Bezug auf den Verlauf des Kantenwinkels nicht seiner Anordnung auf der gekrümmten Oberfläche des zu isolierenden Behälters entspricht. Die entlang den Sektorlinien verlaufenden Schnitte müssen auf die Ebene des Schneidtisches bezogen schraubenförmig verlaufen, damit sie auf der Oberfläche des zu isolierenden Behälters der Meridianebene entsprechen.

**Patentansprüche**

1. Vorrichtung zum Herstellen von kalottenförmigen Ausschnitten wärmedämmender Wände zur Wärmeisolierung von im wesentlichen kugelförmigen Behältern insbesondere für den Transport und die Lagerung von Flüssigkeiten, wobei man Teilstücke der Wärmedämmwände herstellt, die eine Wärmedämmschicht aus Kunststoffschaum und eine darüber angeordnete Dampfsperre in Form einer Schicht aus Metall oder festem Kunststoff haben, gekennzeichnet durch

a) eine Einrichtung zum Schneiden der Kalotten-Rohlinge aus einem vorgeformten Kunststoffschaum-Block (7a) mittels einer an sich bekannten Kettensäge mit einer über die Kanten eines biegsamen Schwertes geführten, an beiden Umlenkachsen (1a, 1b) durch je einen Elektromotor (1c, 1d) angetriebenen Sägenkette und

b) eine Sägeeinrichtung zum Zurechtschneiden der Seitenflächen an den einzelnen Wandausschnitten mittels mehrerer an sich bekannter Bandsägen (11, 11a; 12, 12a).

2. Sägeeinrichtung zum Schneiden der Kalotten-Rohlinge aus einem Kunststoffschaum-Block (7a) nach Anspruch 1, gekennzeichnet durch eine Kettensäge (1), die mit beiden Enden an senkrechten Führungsholmen (2, 3) auf und ab beweglich und in jeder beliebigen Höhe feststellbar angeordnet ist, wobei die Umlenkachsen (1a, 1b) der Kettensäge (1) jeweils um eine waagerechte, parallel zur Schneidrichtung verlaufende Neigungsachse (1e, 1f) gegeneinander neigbar und in jeder erreichbaren Neigung feststellbar sind, wobei ferner die Kettensäge (1) an beiden Enden kraftschlüssig mit je einer in vertikaler Richtung arbeitenden Triebeinrichtung verbunden ist, beide Triebeinrichtungen synchron laufend parallel neben den Führungsholmen verlaufend angeordnet sind und wobei schliesslich die Kettensäge (1) mit den Führungsholmen (2, 3) an einem Maschinengestell angeordnet ist.

3. Vorrichtung nach Anspruch 2, dadurch gekennzeichnet, dass das Maschinengestell der Sägeeinrichtung zum Schneiden der Kalottenrohlinge als Tischgestell (4) ausgebildet ist, das ein Paar in Längsrichtung verlaufender und in senkrechter Ebene gekrümmter Führungsschienen (5, 6) aufweist, welche eine Tischplatte (7) tragen, die mittels Laufrollen auf den Führungsschienen (5, 6) in Schneidrichtung der Kettensäge (1) vor und zurück bewegbar ist.

4. Vorrichtung nach den Ansprüchen 2 und 3, dadurch gekennzeichnet, dass die Führungsschienen (5, 6) auf auswechselbaren Schienenträgern mit unveränderbarer Krümmung angeordnet sind.

5. Vorrichtung nach den Ansprüchen 2 bis 4, dadurch gekennzeichnet, dass die Tischplatte (7) mit einer Einrichtung zum Aufspannen eines Kunststoffhartschaum-Blockes (7a) ausgerüstet ist.

6. Vorrichtung nach Anspruch 5, dadurch gekennzeichnet, dass am Tischgestell (4) unterhalb der Tischplatte (7) eine Antriebseinrichtung mit einem Elektromotor (8) für die Bewegung der Tischplatte (7) auf den Führungsschienen (5, 6) vorgesehen ist, wobei die Bewegungsgeschwindigkeit der Tischplatte (7) der Schnittgeschwindigkeit der Kettensäge (1) anpassbar ist.

7. Vorrichtung nach den Ansprüchen 2 bis 6, dadurch gekennzeichnet, dass die an den Führungsholmen (2, 3) angeordnete Triebeinrichtung zur vertikalen Bewegung der Kettensäge (1) als zwei synchron laufende Spindeltriebe (2a, 3a) ausgebildet ist.

8. Sägeeinrichtung zum massgenauen Schneiden der Stossflächen an den einzelnen Wandausschnitten nach Anspruch 1, dadurch gekennzeichnet, dass

a) zwischen vier Eckpfosten eines quaderförmigen Rahmengestells (9) im unteren Bereich ein Tisch (10) angeordnet ist, auf dem die zu beschneidenden Kalotten-Rohlinge (11) mit der Innenseite nach unten liegend fixierbar sind,

b) auf dem Tisch an zwei einander gegenüberliegenden Seiten zwei Bandsägen (12, 12a) für die Schnitte nach den Kreisring-Linien der Wandausschnitte entlang diesen Linien bewegbar angeordnet sind,

c) über dem Tisch (10) an den beiden anderen einander gegenüberliegenden Seiten zwei weitere Bandsägen (13, 13a) an dem Rahmengestell (9) hängend für die Schnitte nach den Sektorlinien der Wandausschnitte entlang diesen Linien bewegbar angeordnet sind,

d) auf dem Tisch zur Führung der stehend beweglichen Bandsägen (12, 12a) für die Schnitte nach den Kreisring-Linien gekrümmte Führungsschienen (14, 14a) auswechselbar befestigt sind, an denen die Bandsägen (12, 12a) jeweils mit einem Rollen-Untersatz (15, 15a) geführt werden und deren Krümmung der Krümmung der Kreisring-Linien der Wandausschnitte entspricht.

e) die an den Führungsschienen (14, 14a) geführten Bandsägen (12, 12a) auf ihren Rollen-Untersätzen (15, bzw. 15a) jeweils um eine parallel zur Schneidrichtung verlaufende Achse (16, 16a) neigbar gelagert sind, wobei jede gewünschte Neigung mittels einer Schraubspindel (17, 17a) fixierbar ist,

f) die hängend am Rahmengestell (9) angeordneten Bandsägen (13, 13a) für die Schnitte nach den Sektor-Linien jeweils an einem im wesentlichen waagerecht über der gewünschten Schnittlinie verlaufenden Paar von Führungsholmen (18, 181 bzw. 18a, 181a) in Schneidrichtung der Bandsägen (13, 13a) beweglich aufgehängt sind, wobei

g) bei jedem dieser Holmenpaare (18, 181 bzw. 18a, 181a) die Ebene mindestens eines der Holme gegenüber der Ebene des anderen Holmes des gleichen Paares neigbar und in jeder gewünschten Neigung feststellbar ist.

**Claims**

1. Device for manufacturing calotte-shaped sections of heat insulating walls for thermal protection of substantially spherical containers to be used, in particular, for transporting and storing liquids, with components of the heat insulating walls made so as to include a heat insulating layer of foamed synthetics and on top of that a vapour barrier by way of a layer of metal or of solid synthetics, comprising

a) means for cutting the calotte blank out of a preshaped foamed synthetics block (7a) using a chain saw known per se including a saw chain which is led across the edges of a flexible blade and is power-driven by one electric motor (1c, 1d) each at either deflection axis (1a, 1b), and

b) sawing means for cutting the side faces of the various wall sections including a plurality of ribbon saws (11, 11a; 12, 12a) known per se.

2. Sawing means for cutting the calotte blanks out of a foamed synthetics block (7a) according to claim 1, wherein a chain saw (1) is adapted to be moved up and down at either end along vertical guide shafts (2, 3) and to be fixed at any height level, each of the deflection axes (1a, 1b) of the chain saw (1) being adapted to be inclined relative to each other around a horizontal inclination axis (1e, 1f) extending parallel to the cutting direction and to be fixed at any inclination attainable, and wherein the chain saw (1) is positively connected at either end with a driving mechanism each operating in vertical direction, both driving mechanisms being synchronized and arranged so as to be parallel beside the guide shafts and, finally, the chain saw (1) with the guide shafts (2, 3) being arranged at a machine frame.

3. Device according to claim 2, wherein the machine frame of the sawing means for cutting the calotte blanks is designed as a table stand (4) including a pair of guide rails (5, 6) which extend in a longitudinal direction, which are curved in a vertical plane and which support a table top (7) that is movable to and fro in the cutting direction of the chain saw (1) by means of crab rollers.

4. Device according to claims 2 and 3, wherein the guide rails (5, 6) are arranged on interchangeable rail supports of nonvariable curvature.

5. Device according to any one of claims 2 to 4, wherein the table top (7) is equipped with means for clamping a foamed synthetics block (7a).

6. Device according to claim 5, wherein driving means including an electric motor (8) are provided at the table stand (4) below the table top (7) for moving the latter on the guide rails (5, 6) such that the speed of the table top (7) is adaptable to the cutting speed of the chain saw (1).

7. Device according to any one of claims 2 to 6, wherein the driving mechanism arranged at the guide shafts (2, 3) for vertically moving the chain saw (1) is embodied by two synchronized spindle mechanisms (2a, 3a).

8. Sawing means for dimensionally accurate cutting of the abutting surfaces of the various wall sections according to claim 1, wherein

a) a table (10) is arranged between four corner posts of a cuboid frame (9) in its lower portion such that the calotte blanks (11) to be cut can be fixed face down,

b) two ribbon saws (12, 12a) are arranged on the table at two opposite sides thereof so as to be movable along the annular lines of the wall sections for cutting along these lines,

c) another two ribbon saws (13, 13a) are arranged overhead at the frame (9) above the table (10) at the other two opposite sides thereof so as to be movable along the sector lines of the wall sections for cutting along these lines,

d) curved guide rails (14, 14a) are interchangeably attached to the table in order to guide the upright movable ribbon saws (12, 12a) for cutting along the annular lines, each of the ribbon saws (12, 12a) being guided by means of a roller-type undercarriage at the guide rails whose curvature corresponds to that of the annular lines of the wall sections,

e) each of the ribbons saws (12, 12a) guided on their roller-type undercarriages (15, 15a) at the guide rails (14, 14a) is supported so as to permit its inclination around an axis (16, 16a) that extends parallel to the cutting direction and to permit locking at any desired inclination by means of a screw spindle (17, 17a),

f) each of the ribbon saws (13, 13a) arranged overhead at the frame (9) for cutting along the sector lines is suspended at a pair of guide shafts (18, 181; 18a, 181a) that extend substantially horizontally above the cutting line desired so as to be movable in the cutting directions of the ribbon saws (13, 13a),

g) such that with each of these shaft pairs (18, 181; 18a, 181a), the plane of at least one of the shafts is adapted to be inclined relative to the plane of the other shaft and to be locked at any desired inclination,

## Revendications

1. Dispositif pour la fabrication de découpures en forme de calottes de parois calorifuges pour l'isolation thermique de récipients de forme essentiellement sphérique et en particulier pour le transport et le stockage de liquides, la fabrication concernant des tronçons des parois calorifuges présentant une couche calorifuge en mousse synthétique au-dessus de laquelle est disposée une barrière de vapeur en forme d'une couche en métal ou en matière synthétique solide, caractérisé par

a) un appareillage pour la coupe des ébauches des calottes à partir d'un bloc préformé en mousse synthétique (7a) au moyen d'une scie à chaîne en principe connue, avec une chaîne à scier guidée sur les bords d'une lame flexible et entraînée sur les deux axes de renvoi (1a, 1b) respectivement par un moteur électrique (1c, 1d), et

b) un appareillage à scier pour la coupe des surfaces latérales des découpures individuelles des parois, au moyen de plusieurs scies à rubans en principe connues (11, 11a; 12, 12a).

2. Appareillage à scier pour la coupe des ébauches des calottes à partir d'un bloc en mousse synthétique (7a) suivant la revendication 1, caractérisé par une scie à chaîne (1) disposée de façon à pouvoir être remontée et abaissée par ses deux bouts sur des longerons verticaux de guidage (2, 3) et de façon à pouvoir être fixée à une hauteur quelconque, les axes de renvoi (1a, 1b) de la scie à chaîne (1) étant respectivement inclinables entre eux autour d'un axe d'inclinaison (1e, 1f) horizontal et parallèle à la direction de coupe, et fixables en toute inclinaison accessible, la scie à chaîne (1) étant en outre reliée à ses deux bouts par adhérence avec respectivement une unité motrice travaillant en direction verticale, les deux unités motrices à fonctionnement synchronisé étant disposées parallèlement aux longerons de guidage, et la scie à chaîne (1) étant enfin disposée avec les longerons de guidage (2, 3) dans un bâti de machine.

3. Dispositif suivant la revendication 2, caractérisé en ce que le bâti de machine de l'appareillage à scier pour la coupe des ébauches des calottes est conformé comme un châssis de table (4) présentant une paire de rails de guidage (5, 6) disposés en direction longitudinale et courbés en sens vertical, qui portent un dessus de table (7) qui, au moyen de roulettes, peut être déplacé en avant et en arrière sur les rails de guidage (5, 6) en direction de coupe de la scie à chaîne (1).

4. Dispositif suivant les revendications 2 et 3, caractérisé en ce que les rails de guidage (5, 6) sont disposés sur des guide-rails échangeables et avec une courbure fixe.

5. Dispositif suivant les revendications 2 à 4, caractérisé en ce que le dessus de table (7) est muni d'un appareillage pour le serrage d'un bloc en mousse synthétique dure (7a).

6. Dispositif suivant la revendication 5, caractérisé en ce que le châssis de table (4) présente au-dessous du dessus de table (7) un dispositif d'entraînement avec un moteur électrique (8) pour la translation du dessus de table (7) sur les rails de guidage (5, 6), la vitesse de marche du dessus de table (7) pouvant être adaptée à la vitesse de coupe de la scie à chaîne (1).

7. Dispositif suivant les revendications 2 à 6, caractérisé en ce que l'unité motrice disposée sur les longerons de guidage (2, 3) et servant au mouvement vertical de la scie à chaîne (1) est réalisée par deux entraînements à vis (2a, 3a) synchronisés.

8. Appareil de sciage pour la coupe à précision dimensionnelle des abouts de chaque découpure de la paroi suivant la revendication 1, caractérisé en ce que

a) entre les quatre montants d'angle d'un châssis (9) en forme de cube est disposée dans la partie inférieure une table (10) sur laquelle peuvent être fixées les ébauches des calottes à couper (11) avec leur partie intérieure couchée vers le bas,

b) sur la table sont disposées sur deux côtés opposés deux scies à ruban (12, 12a) pour les coupes suivant les lignes des anneaux de cercle des découpures des parois, les scies (12, 12a) pouvant être déplacées le long de ces lignes,

c) sur la table (10) sont disposés sur les deux autres côtés opposés entre eux deux autres scies à ruban (13, 13a), suspendues au châssis (9), pour les coupes le long des lignes des secteurs des découpures, les scies (13, 13a) pouvant être déplacées le long de ces lignes,

d) sur la table pour le guidage des scies à ruban déplaçables et se trouvant debout (12, 12a) pour les coupes le long des lignes des anneaux de cercle, sont fixés des rails de guidage courbes (14, 14a) et échangeables, sur lesquels les scies à ruban (12, 12a) sont chacune guidées par un appui à roulettes (15, 15a) et dont la courbure correspond à la courbure des lignes en anneau de cercle des découpures des parois,

e) les scies à ruban (12, 12a) guidées sur les rails de guidage (14, 14a) sont logées sur leurs appuis à roulettes (15 ou 15a) respectivement de façon à pouvoir être inclinées autour d'un axe parallèle à la direction de coupe (16, 16a), toute inclinaison désirée pouvant être fixée au moyen d'une tige filetée (17, 17a),

f) les scies à ruban (13, 13a) suspendues au châssis (9) et servant aux coupes selon les lignes des secteurs, sont disposées chacune sur une paire de longerons de guidage (18, 181 ou 18a, 181a) se trouvant essentiellement horizontalement au-dessus de la ligne de coupe désirée, et elles sont mobiles en direction de coupe des scies à ruban (13, 13a),

g) pour chacune de ces paires de longerons (18, 181 ou 18a, 181a) le plan d'au moins un de ces longerons étant inclinable par rapport au plan de l'autre longeron de la même paire et fixable en toute inclinaison désirée.

Fig. 1

*Fig.2*

0 050 689

*Fig.3*

Fig. 4

0 050 689